# EUROPEAN PATENT SPECIFICATION

(11) **EP 1 493 641 B1**
(45) Date of publication and mention of the grant of the patent: **06.09.2006**
(21) Application number: 04011032.2
(22) Date of filing: 10.05.2004
(51) Int. Cl.: B60S 1/06

(54) **Vehicle with glass wiper device comprising shape memory actuator means**
Kraftfahrzeug mit Scheibenwischvorrichtung mit Formgedächtnisbetätigungseinrichtung
Véhicule avec un dispositif d'essuyage pour une vitre comprenant un dispositif d'actionnement à mémoire de forme

(30) Priority: 02.07.2003 IT TO20030511
(43) Date of publication of application: 05.01.2005
(73) Proprietor: C.R.F. Società Consortile per Azioni, 10043 Orbassano (Torino) (IT)
(72) Inventor: Butera, Francesco, 10100 Torino (IT); Alacqua, Stefano, 10090 Rivoli Cascine Vica (Torino) (IT)
(74) Representative: Gallarotti, Franco

(56) References cited:
- DE-C1- 3 709 476
- DE-U1- 9 304 458
- FR-A- 2 642 027
- FR-A- 2 717 135
- PATENT ABSTRACTS OF JAPAN vol. 008, no. 267 (M-343), 7 December 1984 (1984-12-07) & JP 59 140147 A (HINO JIDOSHA KOGYO KK), 11 August 1984 (1984-08-11)

## Description

The present invention relates to a vehicle having a glass wiper device which comprises
- a glass wiper brush, associated with a fixed structure of the vehicle to be movable between a first and a second operative position, in the passage between the first and the second position, and vice versa, at least one part of the brush sliding on a surface of the vehicle, to wipe it, and
- actuator means to cause the angular motion of the brush at least from the first to the second position.

The document JP-A-61129353 discloses a glass wiper device of the above type, operating on the glass of a side door of a vehicle. The function of such a device is to assure the visibility of an external rear-view mirror associated to the door of the vehicle, in the presence of rain or snow; for this purpose, the glass wiper cleans a portion of the glass proximate to the external mirror, to allow the vehicle driver to see it clearly.

In the solution according to the aforementioned prior document, the actuator means are constituted by an electric motor, whose output shaft is connected, through an appropriate transmission, to the brush of the glass. Such an arrangement is costly and, especially in relation with the small spaces available inside a door, rather bulky.

Document DE-A-37 09 476, upon which the preamble of claim 1 is based, discloses a device for wiping a window of motor vehicles, comprising a wiping element laid against the window and that can be displaced in transverse relation to its longitudinal extent. The wiping element can be displaced through a drive assembly including an elongated shape memory element, one end of which is fastened to a fixed structure and to the other end of which the wiping element is connected.

The present invention has the aim of indicating a vehicle provided with a glass wiper devices, particularly but not exclusively for the glass of the door of a motor vehicle of a simpler and more economical design than the prior art. Another object of the invention is to provide such a device with extremely small dimensions.

One or more of said objects are achieved, according to the present invention, by a vehicle according to claim 1.

Further preferred characteristics of the invention are contained in the dependent claims.

The invention shall be described with reference to the accompanying drawings, provided purely by way of non limiting example, in which:
- Figure 1 is a perspective view of a part of a vehicle according to the invention;
- Figure 2 is a lateral view of a part of a door of the vehicle of Figure 1;
- Figure 3 is a schematic section according to the line III - III of Figure 2;
- Figure 4 is a lateral schematic view of a glass wiper device that equips the vehicle according to the invention;
- Figure 5 is a lateral schematic view of a glass wiper device according to a first possible variant of the invention;
- Figure 6 is a lateral schematic view of a door of a vehicle according to a second possible variant of the invention.

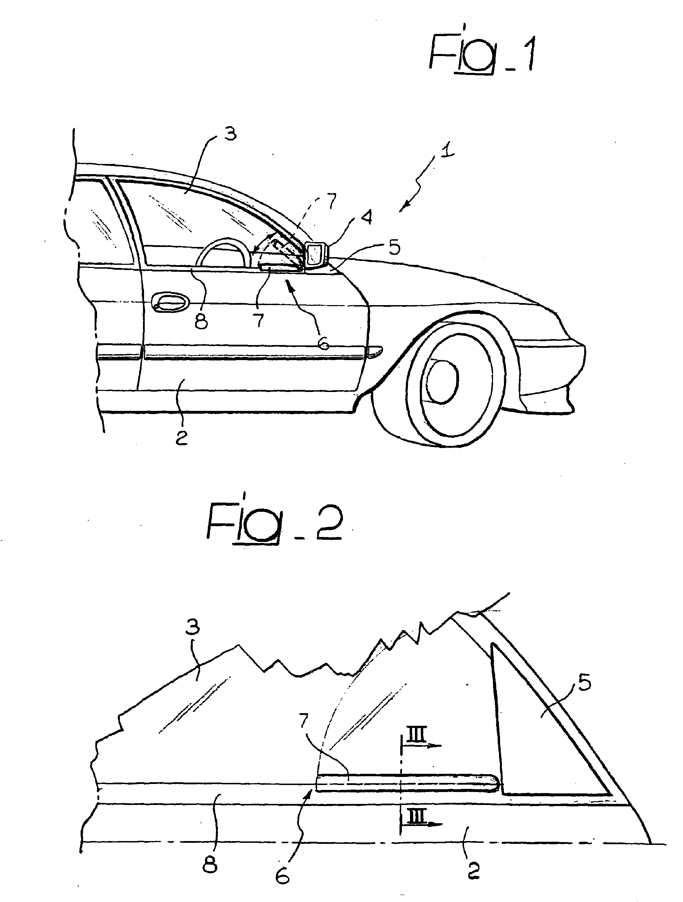

Figure 1 shows the front part of a generic vehicle according to the invention. In the case exemplified herein, said vehicle is a motor car, designated by the reference number 1, comprising a front lateral door 2, having a window provided with a respective glass 3; the number 4 designates an external rear-view mirror 4, fastened to an appropriate area 5 of the structure of the door 2 which is proximate to an angle portion of the glass 3.

The reference number 6 globally designates a glass wiper device comprising a brush 7, for example in the form of a rubber-coated rod, mounted at a sealing gasket 8 associated with the door 2. As shall be seen, the brush 7 is pivotally engaged in its end area to a fixed structure of the door 2, to be movable angularly and slide with alternating motion on the outer face of the glass 3, to wipe said glass, for instance in case of rain or snow, at the angle area of the glass through which the driver of the vehicle 1 can observe the external mirror 4.

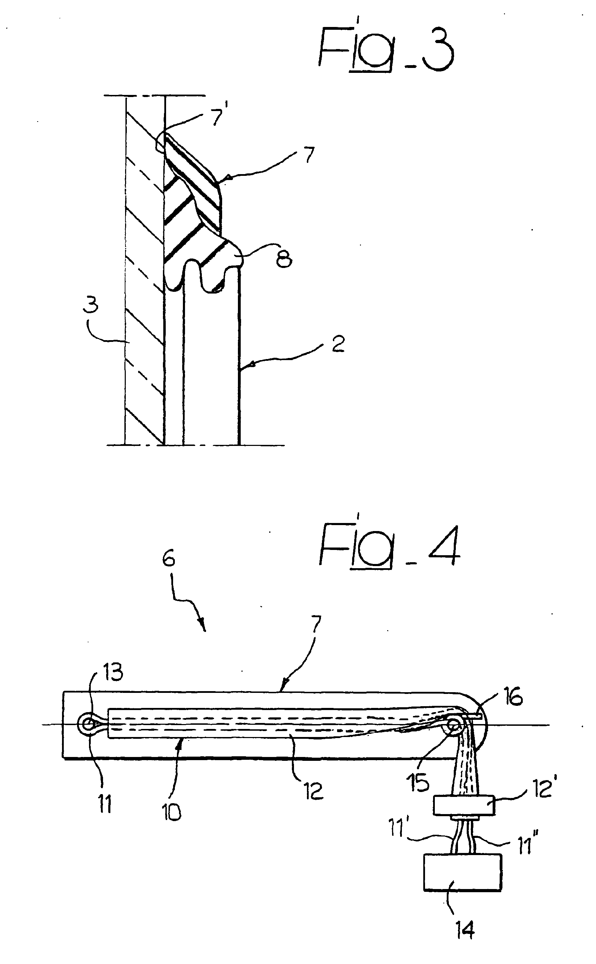

As shown in Figure 3, the gasket 8 is associated to the structure of the door 2, in such a way as constantly to operate tightly on the glass 3, whilst allowing the sliding thereof upwards and downwards for its normal opening and closing. In the respective resting position, the brush 7 is set on the gasket 8, the brush 7 preferably having an inner profile that is shaped to match the outer profile of the gasket 8 and defining, at the same time, a portion 7' destined to serve the function of cleaning the glass 2.

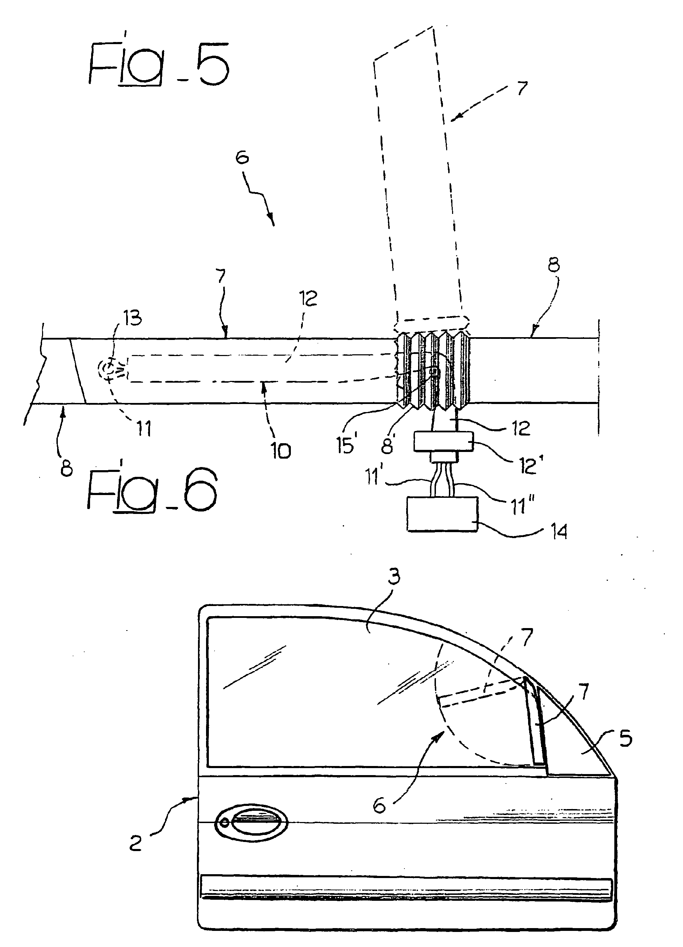

Figure 4 shows the essential constitutive elements of the glass wiper device 6 equipping the vehicle according to the invention. According to the main aspect of the invention, the actuator means for causing the alternating motion of the brush 7 comprise a shape memory actuator.

Shape memory actuator elements have long been known and used in various fields. They use, for example, shape memory metal alloys, capable of deforming when a predetermined transition temperature is exceeded. In general, heating can be obtained because the actuator element directly senses a variable temperature, or feeding an electrical current through the actuator element, to heat it by Joule effect. Note that the use of shape memory alloy actuator elements has already been proposed in combination with glass wipers, Also for the purpose of regulating the degree of pressure of the brush on the glass to be wiped, the normal angular motion of the brush being obtained by means of an electric motor (see for example EP-A-0 457 382).

In the exemplified case, the shape memory actuator, globally designated as 10 in Figure 4, is in the form of a flexible cable, comprising a core formed by a wire 11 made at least in part of a shape memory material. On the wire 11 is moulded a layer of elastic coating 12 which adheres to the wire itself and is preferably made of elastomer/silicone or synthetic material; as shall become readily apparent below, the coating 12 is operative to favour both the cooling of the wire 11 after the current ceases flowing therein, and the return of the wire 11 in a resting position, by effect of the elastic return of the coating itself. The coating 12 is preferably moulded over the wire 11 by means of the simultaneous extrusion of the material constituting the wire 11 and of the material constituting the coating 12; in other words, during the manufacturing process, the wire 11 and its coating 12 are obtained simultaneously, through a co-extrusion process, which has the advantage of allowing to obtain the desired structure with a single operation, with no need for additional assembly operations.

The shape memory wire 11 is U shaped, with its two ends 11' and 11" positioned adjacent to each other and with the going and returning segments buried in the common coating 12 in elastomeric/silicone material; in this way, at a longitudinal end of the coating 12 project the two ends 11', 11" of the wire, adjacent to each other; the arched part of the wire 11 which projects from the other longitudinal end of the coating 12 instead embodies a sort of ring, which is fitted onto a stake 13 integral with the brush 7; said stake 13 thus achieves a mechanical constraint for an end of the actuator 10, the opposite end itself being instead mechanically constrained to a fixed structure, such as the door 2, for example by means of a suitable fastening collar 12'. Such an arrangement has the advantage that both ends of the shape memory wire 11 are adjacent and can thus be electrically connected in a convenient fashion to a respective control circuit 14. Given their reduced dimensions, at least the stake 13 and most of the cable actuator 10 can be housed in a seat defined inside the brush 7.

Also in Figure 4, the reference number 15 designates a pivot for hinging the brush 7 to a fixed structure of the door 2, for instance the same gasket 8. Around the pivot 15 is positioned a spring 16, mounted in such a way as to force the brush 7 towards a respective resting position, visible for example in Figures 2 and 4, in which the brush is substantially parallel to a lower horizontal segment of the gasket 8.

The circuit 14, which comprises, for example, a mosfet, is connected to a suitable power supply source (e.g. the battery of the vehicle 1), not shown, and is operative to apply cyclically an electrical tension to the two ends 11' and 11" of the wire 11, to cause its heating by Joule effect, and hence its shortening. Following the application of the power supply voltage, the wire 11 starts heating and, upon exceeding a determined transition temperature, the wire starts to reduce its length; the shortening of the wire 11 causes the compression of the coating 12, so the entire cable actuator tends to assume a shorted configuration.

The actuator 10 is constrained between the brush 7, at the stake 13, and the fixed structure of the door 2, at the collar 12', with the hinging pivot 15 which operates as an intermediate transmission between the two aforesaid constraint points. In this way, the shortening of the actuator 10 determines the clockwise angular motion of the brush 7, with reference to Figures 1-4, overcoming the action of the spring 16 and the elastic reaction of the material constituting the coating 12; consequently, the portion 7' of the brush 7 slides on the outer surface of the glass 3, until reaching the position shown in dashed lines in Figure 1; after a certain time interval, imposed by the control logic of the system, the circuit 14 determines the interruption of the power supply to the wire 11, which can therefore start to cool and consequently to become longer; as the wire 11 and the cable actuator 10 as a whole tend towards the respective extended configuration, the elastic reaction of the spring 16 causes the brush 7 to return to the original position, with the portion 7' sliding inversely relative, to the previous motion, on the glass 3. The coating 12, which adheres to the wire 11, serves the function of a longitudinally distributed spring, which is subject to compression when the wire 11 shortens following its activation and consequently favours the return of the wire to the resting position by means of its elastic return.

The ON/OFF (electrically powered/not powered) cycle of the wire 11 is repeated under the control of the circuit 14 throughout the time for which the glass wiper device 6 is to be kept active. For this purpose, it is noted that the activation of the device 6 can be commanded by suitable manual means provided inside the passenger compartment of the vehicle 1, such as a usual switch. Alternatively, the device 6 could be conceived to start operation automatically under determined environmental conditions, e.g. detected by rain, snow or condensation sensor means, known in the automotive industry.

As previously mentioned, the coating 12 adhering to the wire 11 serves the function of a longitudinally distributed spring. The elastomeric/silicone material of the coating 12 on the wire 11 is selected to allow the obtainment of a dual advantage. On one hand, this material, which is not an electrical conductor, is not heated, as does instead the wire 11 when electrical current flows through it during the activation of the actuator 10; consequently, the material of the coating 12 favours and accelerates the cooling of the wire 11 at the end of the electrical power supply step. On the other hand, the coating 12, being made of elastic material, acts as a distributed spring which is stressed in compression when the wire 11 is shortened as a result of its activation; the coating 12 then contributes, together with spring 16, to a rapid return of the cable actuator 10 to the resting condition, at the end of step of supplying electrical power, not only because it accelerates cooling, but also because it thrusts the actuator itself towards its resting condition by effect of its elastic return, when the electrical power supply to the wire 11 ceases.

The device according to the invention enables to achieve the indicated aims. The vehicle 1 is provided with a glass wiper device 6 that is simple and economical to construct and easy to control; the use of shape memory actuator means enables to minimise the dimensions of the device 6, which is extremely advantageous in the application described herein, due to the small spaces available within the door of a motor vehicle. The fact that the motion of the brush 7 towards the respective resting position can be obtained in the absence of electrical power supply to the actuator 10 also allows to reduce electrical energy consumption aboard the vehicle.

Naturally, without altering the principle of the invention, the construction details and the embodiments may vary widely relative to what is described and illustrated purely by way of example herein, without thereby departing from the scope of the present invention.

Figure 5 shows a first possible embodiment variant of the invention, whereby the brush 7 is constituted by a segment of the gasket 8 itself; in this case, the gasket 8 comprises an elastic area 8' operating as a hinge, which serves the functions of the pivot 15 and of the spring 16 of Figure 4; in this application, the pivot 15 is replaced by a simple stake 15', aimed at providing a transmission point, in order to be able to arrange the cable actuator 10 in such a way that its shortening allows to obtain the desired angular motion of the brush 7.

The variant of Figure 5 also preferably comprises, at the gasket segment 8 that embodies the brush 7, a supplementary gasket, not shown, aimed at preventing water infiltration towards the interior of the door 2 when the brush 7 moves between its two extreme positions.

Figure 6 schematically shows a second possible embodiment variant of the invention.

In this solution, the brush 7 is hinged in such a way as to be substantially vertical in the respective resting position, or in any case substantially parallel to the edge of the area 5 which is proximate to the glass 3 (note that in Figure 6 as well, for the sake of greater clarity, the external rear-view mirror is not shown).

In the applications described above, the device 5 is operative to wipe a limited area of the glass of a lateral door of a motor vehicle; however, it is clear that, with arrangements known to those versed in the art, the invention can also be used to wipe other surfaces of a vehicle, such as a windshield, a rear window, a rear-view mirror, the glass of a light, also with a brush 7 of greater or smaller dimensions than the one exemplified in the figures.

## Claims

1. A vehicle having a glass wiper device (6) comprising
- a glass wiper brush (7), associated to a fixed structure (2, 8) of the vehicle (1) to be movable between a first and a second position, in the passage between the first and the second position at least one part of the brush (7) sliding on a surface (3) of the vehicle to wipe it, and
- actuator means (10, 14) to cause the angular motion of the brush (7) at least from the first to the second position,
wherein the actuator means (10, 14) comprise
- an active element (11) made at least in part with a shape memory material, capable of assuming an extended configuration and a contracted configuration,
- means (14) for causing the cyclical heating of the active element (11), to cause its passage from the extended configuration to the contracted configuration and consequently obtain the angular motion of the brush (7) from the first to the second position,
and wherein the active element (11) is constrained at one side to the brush (7) and at the other side to a fixed structure (2, 8) of the vehicle (1),
**characterised in that** the active element (11) is constrained to a first end area of the brush (7) and that a second end area of the brush (7) is hinged to a fixed structure (2, 8) of the vehicle (1).

2. A vehicle as claimed in claim 1, **characterised in that** the means for causing the cyclical heating of the active element (11) comprise means (14) for applying an electrical voltage to two ends (11', 11") of the element itself, to cause its heating by Joule effect.

3. A vehicle as claimed in claim 1, **characterised in that** the glass wiper device (6) comprises elastic means (8', 12, 16) having a reaction force operative to stress the brush (7) towards the first position, said reaction force being of such size as to
- allow the passage of the active element (11) from the extended configuration to the contracted configuration as a result of its heating,
- cause the return of the brush (7) from the second position to the first position as a result of ceasing to heat the active element (11).

4. Vehicle as claimed in claim 3, **characterised in that** the elastic means (8', 12, 16) comprise a spring (16).

5. Vehicle as claimed in claim 3, **characterised in that** the elastic means (8', 12, 16) comprise a coating of synthetic material (12) adhering to the active element (11), the coating (12) being elastically deformed when the active element (11) passes from the extended configuration to the contracted configuration, the coating (12) favouring the return of the active element (11) to its extended configuration both thanks to its elastic return, and because it speeds the cooling of the active element (11) when the electrical voltage ceases to be applied.

6. Vehicle as claimed in claim 5, **characterised in that** the active element (11) is folded in U shape inside the coating (12), in such a way as to have a going segment and a returning segment, parallel and adjacent to each other, and with its two ends (11', 11") close to each other.

7. Vehicle as claimed in claim 1, **characterised in that** said surface is a glass (3) of a lateral door (2) of the vehicle (1), an external rear-view mirror (4) being fastened to said door (2), and the brush (7) is angularly movable at an angle area of the glass (3) proximate to a fastening area (5) of the mirror (4) to the door (2).

8. Vehicle as claimed in claim 7, **characterised in that** a gasket (8) is associated to the door (2), operating tightly on the glass (3), the brush (7) being mounted adjacent to the gasket (8) and/or hinged thereto.

9. Vehicle as claimed in claim 8, **characterised in that**, in the first position, the brush (7) is substantially parallel to a horizontal segment of the gasket (8).

10. Vehicle as claimed in claim 7, **characterised in that** a gasket (8) is associated to the door (2), operating tightly on the glass (3), and that the brush (7) is formed at least in part by a segment of the gasket (8).

11. Vehicle as claimed in claim 10, **characterised in that** the gasket (8) comprises at least one area (8') operating as an elastic hinge for the brush (7).

12. Vehicle as claimed in claim 7, **characterised in that** the device comprises at least one of
- manual control means, able to be operated from inside a passenger compartment of the vehicle (1) to cause the activation of the means (14) that cause the cyclical heating of the active element (11),
- sensor means for automatically causing the activation of the means (14) that cause the cyclical heating of the active element (11).

13. Vehicle as claimed in claim 7, **characterised in that** the brush (7) is hinged to a structure of the door (2) in such a way as to be, in the respective first position, substantially vertical or substantially parallel to an edge of said fastening area (5) that is proximate to the glass (3).

## Patentansprüche

1. Fahrzeug mit einer Scheibenwischvorrichtung (6), umfassend
- eine Scheibenwischbürste (7), die mit einem feststehenden Aufbau (2, 8) des Fahrzeugs (1) verbunden ist, so dass sie zwischen einer ersten und einer zweiten Stellung bewegbar ist, wobei beim Durchlauf zwischen der ersten und der zweiten Stellung zumindest ein Teil der Bürste (7) auf einer Fläche (3) des Fahrzeuges gleitet, um sie sauber zu wischen; und
- Antriebselement (10, 14), um die Winkelbewegung der Bürste (7) zumindest von der ersten in die zweite Stellung zu bewirken,
wobei das Antriebselement (10, 14) umfasst:
- ein aktives Element (11), das zumindest teilweise aus einem Formgedächtnismaterial besteht, das in der Lage ist, eine ausgestreckte und eine zusammengezogene Form anzunehmen,
- eine Einrichtung (14), um das periodische Beheizen des aktiven Elements (11) zu bewirken, damit sein Durchlauf vom ausgestreckten Zustand in den zusammengezogenen Zustand bewirkt und folglich die Winkelbewegung der Bürste (7) von der ersten in die zweite Stellung erreicht wird,
und bei der das aktive Element (11) auf der einen Seite an der Bürste (7) und auf der anderen Seite an einem feststehenden Aufbau (2, 8) des Fahrzeuges (1) eingespannt ist,
**dadurch gekennzeichnet, dass** das aktive Element (11) an einem ersten Endbereich der Bürste (7) eingespannt ist und dass der zweite Endbereich der Bürste (7) an einem feststehenden Aufbau (2, 8) des Fahrzeugs gelenkig angebracht ist.

2. Fahrzeug nach Anspruch 1, **dadurch gekennzeichnet, dass** die Einrichtung, die das periodische Beheizen des aktiven Elements (11) veranlasst, eine Einrichtung (14) zum Anlegen einer elektrischen Spannung an zwei Enden (11', 11 ") des Elements selbst umfasst, um seine Erwärmung durch den Joule-Effekt zu bewirken.

3. Fahrzeug nach Anspruch 1, **dadurch gekennzeichnet, dass** die Scheibenwischvorrichtung (6) eine elastische Einrichtung (8', 12, 16) mit einer Reaktionskraft umfasst, die wirksam wird, um die Bürste (7) in Richtung der ersten Stellung zu spannen, wobei die Reaktionskraft eine solche Größe aufweist, um
- den Durchlauf des aktiven Elements (11) von der ausgestreckten Form in die zusammengezogene Form infolge seiner Erwärmung zu ermöglichen,
- das Zurückkehren der Bürste (7) von der zweiten Stellung in die erste Stellung **dadurch** zu bewirken, dass das Beheizen des aktiven Elements (11) aufhört.

4. Fahrzeug nach Anspruch 3, **dadurch gekennzeichnet, dass** die elastische Einrichtung (8', 12', 16) eine Feder (16) enthält.

5. Fahrzeug nach Anspruch 3, **dadurch gekennzeichnet, dass** die elastische Einrichtung (8', 12, 16) eine Beschichtung aus synthetischem Material (12) umfasst, die an dem aktiven Element (11) haftet, wobei die Beschichtung (12) elastisch verformt wird, wenn sich das aktive Element (11) von der ausgestreckten Form in die zusammengezogene Form bewegt, wobei die Beschichtung (12) die Rückkehr des aktiven Elements (11) in seine ausgestreckte Form bevorzugt, sowohl dank seiner elastischen Rückführung als auch weil es die Abkühlung des aktiven Elements (11) beschleunigt, wenn das Anlegen der elektrischen Spannung aufhört.

6. Fahrzeug nach Anspruch 5, **dadurch gekennzeichnet, dass** das aktive Element (11) im Inneren der Beschichtung (12) in U-Form zusammengelegt wird, derart, dass es ein arbeitendes Segment und ein rückführendes Segment aufweist, parallel und aneinander angrenzend, wobei seine zwei Enden (11', 11 ") nahe aneinander liegen.

7. Fahrzeug nach Anspruch 1, **dadurch gekennzeichnet, dass** die Fläche eine Scheibe (3) einer Seitentür (2) des Fahrzeuges (1) ist, ein Außenrückspiegel (4), der an dieser Tür (2) befestigt ist, und die Bürste (7) winklig bewegbar ist in einem Winkelbereich der Scheibe (3) unmittelbar anschließend an einen Befestigungsbereich (5) des Spiegels (4) an der Tür (2).

8. Fahrzeug nach Anspruch 7, **dadurch gekennzeichnet, dass** mit der Tür (2) eine Dichtung (8) verbunden ist, die fest an der Scheibe (3) einwirkt, und dass die Bürste (7) an der Dichtung (8) angrenzend angebracht und/oder gelenkig daran angebracht ist.

9. Fahrzeug nach Anspruch 8, **dadurch gekennzeichnet, dass** die Bürste (7) in der ersten Stellung im Wesentlichen parallel zu einem waagerechten Segment der Dichtung (8) ist.

10. Fahrzeug nach Anspruch 7, **dadurch gekennzeichnet, dass** mit der Tür (2) eine Dichtung (8) verbunden ist, die fest an der Scheibe (3) einwirkt, und dass die Bürste (7) zumindest teilweise durch ein Segment der Dichtung (8) gebildet wird.

11. Fahrzeug nach Anspruch 10, **dadurch gekennzeichnet, dass** die Dichtung (8) zumindest einen Bereich (8') umfasst, der wie ein elastisches Gelenk für die Bürste (7) funktioniert.

12. Fahrzeug nach Anspruch 7, **dadurch gekennzeichnet, dass** die Vorrichtung zumindest eines umfasst von:
- manuelle Steuereinrichtung, die im Inneren des Fahrgastraumes des Fahrzeugs (1) betätigt werden kann, um die Aktivierung der Einrichtung (14) zu veranlassen, die das periodische Beheizen des aktiven Elements (11) bewirkt,
- eine Sensoreinrichtung, um die Aktivierung der Einrichtung (14) automatisch zu veranlassen, die das periodische Beheizen des aktiven Elements (11) bewirkt.

13. Fahrzeug nach Anspruch 7, **dadurch gekennzeichnet, dass** die Bürste (7) an einem Aufbau der Tür (2) eingehängt ist, derart, dass sie in der jeweiligen ersten Stellung im Wesentlichen vertikal oder im Wesentlichen parallel zu einer Kante des Befestigungsbereiches (5) liegt, der sich unmittelbar an die Scheibe (3) anschließt.

## Revendications

1. Véhicule ayant un dispositif d'essuie-glace (6) comprenant :
- un balai (7) d'essuie-glace, associé à une structure fixe (2, 8) du véhicule (1) pour pouvoir être déplacé entre une première et une seconde position, dans le passage entre la première et la seconde position, au moins une partie du balai (7) glissant sur une surface (3) du véhicule pour l'essuyer, et
- des moyens d'actionnement (10, 14) destinés à entraîner le mouvement angulaire du balai (7) au moins de la première à la seconde position,
dans lequel les moyens d'actionnement (10, 14) comprennent :
- un élément actif (11) fabriqué au moins en partie à partir d'un matériau à mémoire de forme, capable d'adopter une configuration allongée et une configuration contractée,
- des moyens (14) destinés à entraîner le chauffage cyclique de l'élément actif (11) pour le faire passer de la configuration allongée à la configuration contractée et par conséquent obtenir le mouvement angulaire du balai (7) de la première à la seconde position,
et dans lequel l'élément actif (11) est délimité sur un côté par le balai (7) et sur l'autre côté par une structure fixe (2, 8) du véhicule (1),
**caractérisé en ce que** l'élément actif (11) est délimité par une première zone d'extrémité du balai (7) et **en ce qu'**une seconde zone d'extrémité du balai (7) est articulée sur une structure fixe (2, 8) du véhicule (1).

2. Véhicule selon la revendication 1, **caractérisé en ce que** les moyens destinés à entraîner le chauffage cyclique de l'élément actif (11) comprennent des moyens (14) destinés à appliquer une tension électrique aux deux extrémités (11', 11") de l'élément lui-même, pour entraîner son chauffage par effet Joule.

3. Véhicule selon la revendication 1, **caractérisé en ce que** le dispositif d'essuie-glace (6) comprend des moyens élastiques (8', 12, 16) ayant une force de réaction fonctionnant pour solliciter le balai (7) vers la première position, ladite force de réaction étant d'une importance telle qu'elle :
- permet le passage de l'élément actif (11) de la configuration allongée à la configuration contractée en raison de son chauffage,
- entraîne le retour du balai (7) de la seconde position à la première position en raison de l'interruption du chauffage de l'élément actif (11).

4. Véhicule selon la revendication 3, **caractérisé en ce que** les moyens élastiques (8', 12, 16) comprennent un ressort (16).

5. Véhicule selon la revendication 3, **caractérisé en ce que** les moyens élastiques (8', 12, 16) comprennent un revêtement de matériau synthétique (12) qui adhère à l'élément actif (11), le revêtement (12) étant déformé de manière élastique lorsque l'élément actif (11) passe de la configuration allongée à la configuration contractée, le revêtement (12) favorisant le retour de l'élément actif (11) jusqu'à sa configuration allongée à la fois grâce à son retour élastique, et du fait qu'il accélère le refroidissement de l'élément actif (11) lorsque la tension électrique cesse d'être appliquée.

6. Véhicule selon la revendication 5, **caractérisé en ce que** l'élément actif (11) est plié en forme de U à l'intérieur du revêtement (12), de telle sorte qu'il ait un segment aller et un segment retour, parallèles et adjacents les uns par rapport aux autres, et avec ses deux extrémités (11', 11") proches les unes des autres.

7. Véhicule selon la revendication 1, **caractérisé en ce que** ladite surface est une vitre (3) d'une portière latérale (2) du véhicule (1), un rétroviseur arrière (4) étant fixé à ladite portière (2), et le balai (7) pouvant être déplacé de manière angulaire selon une zone angulaire de la vitre (3) à proximité d'une zone de fixation (5) du rétroviseur (4) sur la portière (2).

8. Véhicule selon la revendication 7, **caractérisé en ce qu'**un joint d'étanchéité (8) est associé à la portière (2), fonctionnant de manière étanche sur la vitre (3), le balai (7) étant monté de manière adjacente au joint d'étanchéité (8) et/ou articulé sur celui-ci.

9. Véhicule selon la revendication 8, **caractérisé en ce que**, dans la première position, le balai (7) est sensiblement parallèle par rapport à un segment horizontal du joint d'étanchéité (8).

10. Véhicule selon la revendication 7, **caractérisé en ce qu'**un joint d'étanchéité (8) est associé à la portière (2), fonctionnant de manière étanche sur la vitre (3), et **en ce que** le balai (7) est formé au moins en partie par un segment du joint d'étanchéité (8).

11. Véhicule selon la revendication 10,
**caractérisé en ce que** le joint d'étanchéité (8) comprend au moins une zone (8') fonctionnant comme une articulation élastique pour le balai (7).

12. Véhicule selon la revendication 7, **caractérisé en ce que** le dispositif comprend au moins un parmi :
- des moyens de commande manuelle, pouvant être actionnés depuis l'intérieur d'un compartiment passager du véhicule (1) pour entraîner l'activation des moyens (14) qui entraînent le chauffage cyclique de l'élément actif (11),
- des moyens formant capteur destinés à entraîner de manière automatique l'activation des moyens (14) qui entraînent le chauffage cyclique de l'élément actif (11).

13. Véhicule selon la revendication 7, **caractérisé en ce que** le balai (7) est articulé sur une structure de la portière (2) de telle sorte qu'il soit, dans la première position respective, sensiblement vertical ou sensiblement parallèle par rapport à un bord de ladite zone de fixation (5) qui est à proximité de la vitre (3).
